(19)

**Europäisches Patentamt**
**European Patent Office**
**Office européen des brevets**

(11) **EP 1 764 894 A1**

(12) **EUROPEAN PATENT APPLICATION**

(43) Date of publication:
**21.03.2007 Bulletin 2007/12**

(51) Int Cl.:
**H02J 3/38** (2006.01)

(21) Application number: **05405545.4**

(22) Date of filing: **19.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **ABB Schweiz AG**
**5400 Baden (CH)**

(72) Inventors:
• **Ponnaluri, Srinivas**
  **5417 Untersiggenthal (CH)**
• **Ronner, Beat**
  **4464 Maisprach (CH)**

(74) Representative: **ABB Patent Attorneys**
**c/o ABB Schweiz AG,**
**Intellectual Property (CH-LC/IP),**
**Brown Boveri Strasse 6**
**5400 Baden (CH)**

(54) **Method for detecting islanding operation of a distributed generator**

(57)    The inventive method comprises the steps of introducing a reactive current reference square wave, detecting load voltage changes at every change in the reactive current reverence wave, and determining whether the detected load voltage changes exceed a predefined islanding detection threshold value, indicating a loss of mains and an islanding operation of the power generator.

With the inventive loss of mains detection, islanding can be detected within a shortest period of time, even if the local islands active and reactive load matches exactly the distributed generators active and reactive power generation. So even without a sudden voltage change, unintentional islanding can immediately be detected and control electronics can safely turn of the distributed power generator.

Fig. 5

EP 1 764 894 A1

**Description**

Background of the Invention

The present invention relates to the field of power electronics, and more particularly to a method for detecting the islanding operation of a distributed generator connected to a utility grid and to a device for detecting islanding operation of a distributed power generator.

Distributed resources such as distributed power generators are used to feed additional active power into a utility grid close to electrical loads or to ensure standby power for critical loads when power from the grid is temporarily unavailable. Distributed generators are connected to the power grid with power electronic switches.

When one or more distributed resources become isolated from the rest of the power system and inadvertently continue to serve local island loads separately from the utility grid, the condition is known as "loss of mains" or "unintentional islanding".

Upon having lost the stability provided by the utility grid, differences in active and reactive power of the local island load and the power generation of the distributed generator may lead to sudden large voltage changes. This usually causes the distributed generator protection device to act and trip immediately.

If, however, the active and reactive power of the local island load matches the active and reactive power generation, there will be no voltage jump that would trigger the protection device. Unless there is an alternative islanding detection, the distributed generator would continue to operate. Even though some of the distributed generators are designed to run in islanding, a number of potentially serious problems are associated with islanding:

- Distributed-generation equipment such as a motor-generator set can become an isolated source of electricity during power outages on the grid, posing harm to utility personnel and equipment.

- Customer equipment may be damaged by uncontrolled voltage and frequency excursions.

- Utility equipment, such as surge arresters, may be damaged by over-voltages that occur during a shift neutral reference or resonance.

- Utility personnel or the public may be harmed by the inadvertent energizing of the lines by the distributed resources.

It is therefore desirable to immediately react upon detection of an unintentional loss of mains. In order to address the above-mentioned safety concerns in distributed generation, Underwriters Laboratories Standard UL 1741 was developed. Standard UL 1741 requires tripping of the distributed generator within two seconds once the connection to the utility grid has been lost.

Background Art

In "Islanding Detection Method of Distributed Generation Units Connected to Power Distribution System", J. E. Kim, J. S. Hwang, IEEE 2000, a method is proposed for distributed power generation based on synchronous generators. To detect islanding, the internal electromagnetic field of the generator is increased and the change in the reactive power flow and the load voltage are examined. As the internal impedance of the power generator is up to a few percent of the power generators rating, a one percent change in the generated voltage will produce a large change in reactive power when grid is present. Due to the utility grids stability, the load voltage is not affected. Once the connecting breaker is open there will be no significant change in reactive power and the load voltage will change in the same proportion as the internal voltage variation. Using this information the Loss of Mains is detected.

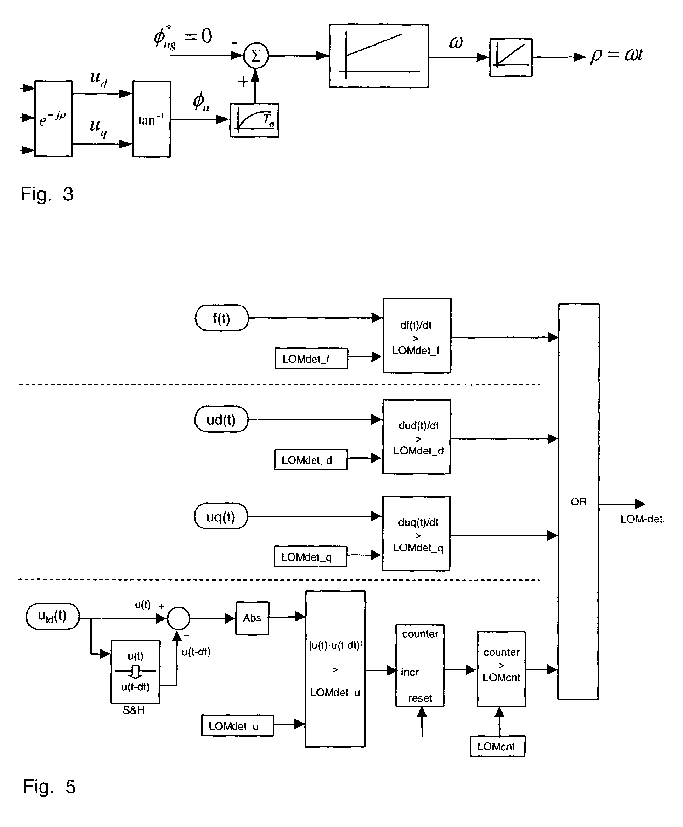

In "Performance of Inverter Interfaced Distributed Generation", Simon R. Wall, IEEE 2001, a method is proposed where the frequency output of a phase locked loop (PLL) as shown in Fig. 3 is disturbed by adding an additional disturbance frequency. When the utility grid is present the load voltage is nearly unchanged. Increase in frequency will increase the phase angle of the inverter internal voltage. As the load voltage remains steady in presence of the utility grid voltage, the active and reactive power controllers will compensate the angle error. In case of an islanded network an increase in frequency will cause the internal voltage angle to advance. As the load impedance is significantly higher than the internal impedance of the power generator, the load voltage will follow the change in phase angle. This would not change the active and reactive powers significantly but the PLL will see a phase lead in the voltage and try to chase the same by increasing the frequency further. This process will go on until a rate of change of frequency-trip is activated or an over frequency-trip occurs.

Summary of the Invention

It is an object of the invention to propose a new method for detecting islanding of a distributed power generator and to provide a device for detecting islanding operation of a distributed power generator.

The inventive method comprises the steps of introducing a reactive current reference wave, detecting load voltage changes caused by changes in the reactive current reverence wave, and determining whether the detected load voltage changes exceed a predefined islanding detection threshold value, indicating a loss of mains and an islanding operation of the power generator.

The reactive current reference wave can be a square wave, a ramp wave, a sine wave or a trapezoidal wave. Load voltage samples are taken every time the reference current passes a threshold value or, in case of a square wave, when it changes its value.

Preferably, a counter value is incremented every time the detected load voltage changes exceed the predefined islanding detection threshold value, and the loss of mains is detected if within a predefined period of time the increment of the counter value exceeds a predefined value. If the counter value is reset at the beginning of the predefined period of time, the loss of mains is detected if the counter value exceeds the predefined value at the end of the predefined period of time.

If the predefined islanding detection threshold value of the voltage is chosen to be at least approximately 50 per cent of the impedance level, the reliability of islanding detection can be approved. For values substantially below 50 per cent of the impedance level, there is a certain risk of false detection of islanding operation .

If the injected current used is a harmonic, it's frequency is preferably set below the LCL filter corner frequency of the inverter. Otherwise a substantial part of the injected current is filtered by the capacitor and only a small part reaches the utility grid.

With the inventive loss of mains detection, islanding can be detected within a shortest period of time, even if the local islands active and reactive load matches exactly the distributed generators active and reactive power generation. So even without a sudden voltage change, unintentional islanding can immediately be detected and control electronics can safely turn of the distributed power generator.

Brief Description of the Drawings

The inventive method and device will be explained in more details on the bases of the drawings. The drawings show in

Fig 1.    a circuit model in grid operation,

Fig 2.    resonant circuit for anti-islanding test as defined by the standard UL 1741,

Fig 3.    an exemplary general phase locked loop (PLL),

Fig 4.    the reactive current reference generated for the inventive loss of mains detection, and

Fig 5.    the inventive logic for islanding detection.

Description of the Preferred Embodiments

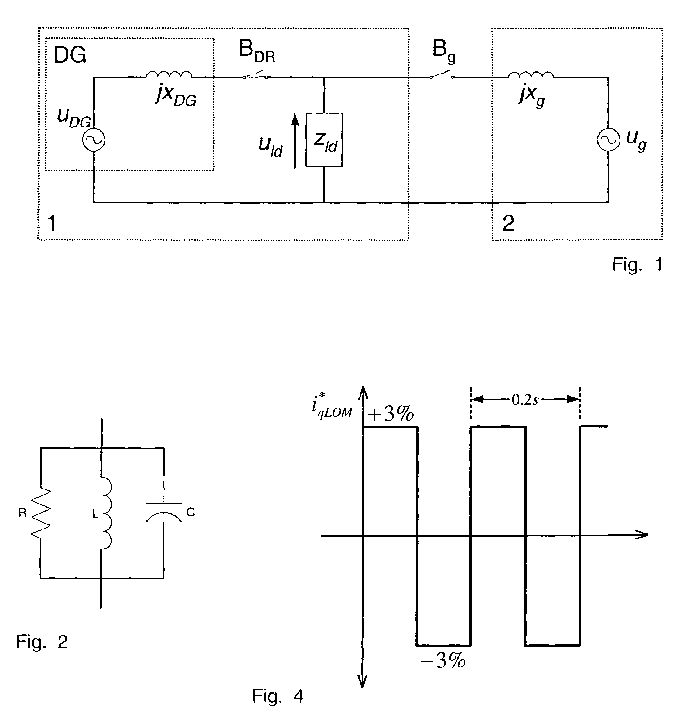

As mentioned above, distributed generators generate and feed active power in to the utility grid and some of them also have the capability to run in island mode. However, it is important for safety reasons, that such power generation does not take place in an unintentional island. An unintentional island can be created because of opening of a breaker by maintenance personnel or by tripping of a far end breaker. Such a situation is schematically shown in Fig 1. When the incoming breaker $B_g$ is opened the power electronics based distributed generator DG, which is also often referred to as distributed resource (DR) or uninterruptible power supply (UPS), continues to supply the local island with power.

If the local islands active and reactive load is significantly different from the distributed generators active and reactive power generation, then after opening of the incoming breaker this difference will create a large voltage change. The large change in voltage indicates as loss of mains. The distribute generator protection will act and safely open contactor $B_{DR}$ within time. The distributed generator is disconnected and no further action is required.

If, however, the local islands active and reactive load matches exactly the distributed generators active and reactive power generation, the control electronics will see no voltage jump and the distributed generator continues to operate. The UL 1741 standard specifies that the distributed generator must trip even under such a condition within two seconds. For test purposes a local island load $Z_{ld}$ is connected to the distributed generator, as shown in Fig. 2. The parallel L and C of the load are tuned to the fundamental frequency of the network and split to match the reactive power generation of the distributed generator. The resistor is chosen to match the active power generation of the distributed generator. During the test the active and reactive power injected in to the network shall not vary more than ±3 per cent of the rated kVA of the distributed generator, according to the UL 1741 test requirements. To test the inventive loss of mains detection, the incoming breaker is opened. In order to pass the loss of mains detection test, the distributed generator has to trip within 2 seconds from the opening of the incoming breaker.

The inventive loss of mains detection is based on injection of reactive current or power at fundamental or any other selected frequency. The injection levels are chosen to be within the UL 1741 standard limits of ±3 per cent of the rated current.

In an exemplary embodiment of the inventive loss of mains detection, a reactive current reference square wave as shown in Fig. 4 is generated at a frequency of 5Hz with a magnitude of ±3 per cent of the rated current. The frequency of the reactive current reference square wave was set to 5Hz. Of course, the frequency can be set to another value above 5Hz or even below, as long as there are a sufficient number of changes in the reference current during the 2 second period.

The reactive current injection has an impact on the load voltage $u_{ld}$. The load voltage is therefore monitored and changes corresponding to the current injection are detected. As long as the utility grid is present and thus provides stability, the change in load voltage due to the injected reactive current reference square wave is minimal.

But as soon as the utility grid is disconnected by opening the incoming breaker $B_g$, the load voltage changes significantly. The impedance $Z_{ld}$ of the separated island load is several times higher than the total grid impedance.

In order to detect a loss of mains, the load voltage is sampled and stored every time a change in the reactive current reference square wave happens. The samples of the load voltage changes d and q axis voltages are held as shown in Fig. 5 and will be compared at the time of the next change in the reactive current reference square wave to the then current load voltage. The difference between the actual d and q axis voltages u(t) and the previously sampled and held values u(t-dt) is calculated. The absolute of the difference between the actual d and q axis voltages and their sampled and held values is then compared with an islanding detection threshold value LOMdet_u. If at any time the voltage change exceeds the islanding detection threshold value a loss of mains is detected. In order not to falsely detect a loss of mains if the comparator values exceeds the threshold value due to a disturbance in the still available utility grid the following safety measure can be implemented.

A counter is implemented to count the number of loss of mains detections within a specified period of time. Each time a loss of mains is detected, a counter value is incremented. Within the UL 1741 standard specified time of two seconds, the exemplary reactive current square wave has 20 edges, thus changes its value 20 times. This gives a possibility of voltage comparison and loss of mains detection of at least 19 times within the two second interval. At the end of the interval, if the counter has not gone above a predefined counter threshold value LOMcnt, e.g. above 10, it is assumed that there is no loss of mains and that disturbances in the utility grid voltage have caused voltage jumps. If the counter does go above the specified number, then a loss of mains is detected. The counter is reset at the beginning of every period of two seconds.

Instead of a square wave the reactive current reference injected can alternatively be a ramp wave, a sine wave or a trapezoidal wave. The reference wave can be used to trigger the sampling of the load voltage. A sample of the monitored voltage is taken each time the current wave passes a certain threshold value or when it changes from a positive to a negative value or vice-versa.

Assuming a linear load and an active power difference of ΔP and reactive power difference of ΔQ, the load voltage jump as a function of difference power when the utility grid is lost is given by,

$$(\Delta u_d + j\Delta u_q) \cdot (\Delta u_d + j\Delta u_q) = (\Delta P + j\Delta Q) \cdot (R_{load} + jX_{load})$$

*or*

$$\Delta u_d^2 - \Delta u_q^2 = \Delta P R_{load} - \Delta Q X_{load}$$

$$2\Delta u_d \Delta u_q = \Delta P X_{load} + \Delta Q R_{load}$$

(1)

Both d and q axis voltages $u_d$ and $u_q$ get disturbed in case of a loss of mains. This causes the voltage angle to suddenly change and therefore the PLL will change the frequency *f*. This in turn will decrease or increase the frequency depending on the impedance and change in powers.

The inventive loss of mains detection is therefore preferably used in combination with an additional detection of loss of mains based on d*f*/dt and over-/under-voltage. The additional detections are also included in Fig. 5.

If the frequency or either or both of the active and/ or reactive voltage changes faster than a given rate (LOMdet_f, LOMdet_d or LOMdet_q), this is an indication for loss of grid.

Both of these two additional detections can be used for fast loss of mains detection whenever the local load does not match the power generation. The output of each detection branch is monitored and loss of mains is detected by the system whenever at least one of the paralleled detection systems produces a positive loss of mains detection signal.

List of Reference Symbols

| $B_{DR}$ | breaker distributed resource |
|---|---|
| $B_g$ | incoming breaker |
| DG | Distributed generator |
| $Z_{ld}$ | Local island load |
| LOMdet_d, LOMdet_q, LOMdet_u, LOMdet_f | Islanding detection threshold values |
| LOMcnt | Islanding detection counter threshold |
| 1 | Local island |
| 2 | Utility grid |

**Claims**

1. Method for detecting islanding operation of a distributed resource, comprising the steps of
   introducing a reactive reference current,
   detecting load voltage changes caused by the reactive reference current, and determining whether the detected load voltage changes exceed a predefined islanding detection threshold value, indicating an islanding operation of the distributed resource.

2. Method of claim 1, wherein
   the reactive reference current introduced is a square wave, and
   the load voltage changes are detected every time the reference current changes its value.

3. Method of any one of claims 1 or 2, further comprising the step of
   incrementing a counter value every time the detected load voltage changes exceed the predefined islanding detection threshold value, and
   detecting an islanding operation if within a predefined period of time the increment of the counter value exceeds a predefined counter threshold value (LOMcnt).

4. Method of claim 3, wherein
   the counter value is reset at the beginning of the predefined period of time, and
   the islanding operation is detected if the counter value exceeds the predefined counter threshold value (LOMcnt) at the end of the predefined period of time.

5. Method of any one of claims 1 to claim 4, wherein
   the load voltage changes are detected by periodically measuring, sampling and storing the current load voltage values (u(t)) and by comparing the current load voltage values to previously measured, sampled and stored load voltage values (u(t-dt)).

6. Method of any one of claims 1 to claim 5, wherein in addition
   the change of load voltage frequency (df(t)/dt) is detected, and
   the islanding operation is detected if the change rate of frequency exceeds a predefined rate (LOMdet_f).

7. Method of any one of claims 1 to claim 6, wherein in addition
   the change in active and/ or reactive load voltage ($du_d(t)/dt$, $du_q(t)/dt$) are detected, and the islanding operation is detected if the load voltage change rate exceeds a predefined rate (LOMdet_d, LOMdet_q).

8. Device for detecting islanding operation of a distributed resource, comprising means for introducing a reactive current reference wave,
   means for detecting load voltage changes triggered by changes in reactive current reverence wave, and
   means for determining whether the detected load voltage changes exceed a predefined islanding detection threshold value, indicating an islanding operation of the power generator.

9. Device of claim 7, further comprising
   a counter, the value of which can be incremented every time the detected load voltage changes exceed the predefined islanding detection threshold value, and
   means for detecting an islanding operation if within a predefined period of time the increment of the counter value or the counter value itself exceeds a predefined value.

Fig. 1

Fig. 2

Fig. 4

$$\phi_{ug}^{*} = 0$$

Fig. 3

Fig. 5

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JERAPUTRA C ET AL: "An improved anti-islanding algorithm for utility interconnection of multiple distributed fuel cell powered generations" APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, 6 March 2005 (2005-03-06), pages 103-108Vol1, XP010809382 ISBN: 0-7803-8975-1 * the whole document * | 1,6,8 | H02J3/38 |
| X | JERAPUTRA C ET AL: "Development of a robust anti-islanding algorithm for utility interconnection of distributed fuel cell powered generation" APPLIED POWER ELECTRONICS CONFERENCE AND EXPOSITION, 2004. APEC '04. NINETEENTH ANNUAL IEEE ANAHEIM, CA, USA 22-26 FEB. 2004, PISCATAWAY, NJ, USA,IEEE, vol. 3, 22 February 2004 (2004-02-22), pages 1534-1540, XP010705286 ISBN: 0-7803-8269-2 * page 1537 - page 1538 * | 1,6,8 | |
| D,A | KIM J E ET AL: "Islanding detection method of distributed generation units connected to power distribution system" POWER SYSTEM TECHNOLOGY, 2000. PROCEEDINGS. POWERCON 2000. INTERNATIONAL CONFERENCE ON 4-7 DECEMBER 2000, PISCATAWAY, NJ, USA,IEEE, 4 December 2000 (2000-12-04), pages 643-647, XP010528073 ISBN: 0-7803-6338-8 * page 644 - page 645 * | | TECHNICAL FIELDS SEARCHED (IPC) H02J |

-/--

The present search report has been drawn up for all claims

| Place of search | Date of completion of the search | Examiner |
|---|---|---|
| Munich | 26 January 2006 | Lorenzo Feijoo, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**European Patent Office**

**EUROPEAN SEARCH REPORT**

Application Number

EP 05 40 5545

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JUN YIN ET AL: "Recent developments in islanding detection for distributed power generation" POWER ENGINEERING, 2004. LESCOPE-04. 2004 LARGE ENGINEERING SYSTEMS CONFERENCE ON HALIFAX, NS, CANADA 28-30 JULY 2004, PISCATAWAY, NJ, USA,IEEE, US, 28 July 2004 (2004-07-28), pages 124-128, XP010738118 ISBN: 0-7803-8386-9 * page 126 - page 127 * | | |
| A | EP 0 746 078 A (KABUSHIKI KAISHA MEIDENSHA; THE TOKYO ELECTRIC POWER COMPANY, INCORPOR) 4 December 1996 (1996-12-04) * claim 2 * | 6 | |
| A | US 2003/098671 A1 (HOCHGRAF CLARK GLENN) 29 May 2003 (2003-05-29) * the whole document * | | TECHNICAL FIELDS SEARCHED (IPC) |
| A | US 2001/056330 A1 (WILLS ROBERT H) 27 December 2001 (2001-12-27) * paragraph [0018] * * paragraph [0079] - paragraph [0087] * | | |
| A | US 2005/057950 A1 (COLBY ROY STEPHEN ET AL) 17 March 2005 (2005-03-17) * abstract; claim 33 * * paragraph [0059] - paragraph [0066]; figures 8,9 * | | |

-/--

The present search report has been drawn up for all claims

| Place of search | Date of completion of the search | Examiner |
|---|---|---|
| Munich | 26 January 2006 | Lorenzo Feijoo, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 05 40 5545

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YAMAGUCHI M ET AL: "Development of a new utility-connected photovoltaic inverter LINE BACK" 30 October 1994 (1994-10-30), TELECOMMUNICATIONS ENERGY CONFERENCE, 1994. INTELEC '94., 16TH INTERNATIONAL VANCOUVER, BC, CANADA 30 OCT.-3 NOV. 1994, NEW YORK, NY, USA,IEEE, PAGE(S) 676-682 , XP010136368 ISBN: 0-7803-2034-4 * page 680 * | | |
| A | YE Z ET AL: "A new family of active antiislanding schemes based on DQ implementation for grid-connected inverters" 20 June 2004 (2004-06-20), POWER ELECTRONICS SPECIALISTS CONFERENCE, 2004. PESC 04. 2004 IEEE 35TH ANNUAL AACHEN, GERMANY 20-25 JUNE 2004, PISCATAWAY, NJ, USA,IEEE, US, PAGE(S) 235-241VOL1 , XP010737997 ISBN: 0-7803-8399-0 * the whole document * | | TECHNICAL FIELDS SEARCHED (IPC) |
| A | WO 01/82444 A (THE POWER GENERATION COMPANY LTD; BRIGHT, CHRISTOPHER, GRAHAM) 1 November 2001 (2001-11-01) * page 25, line 10 - line 16 * | | |

The present search report has been drawn up for all claims

| Place of search | Date of completion of the search | Examiner |
|---|---|---|
| Munich | 26 January 2006 | Lorenzo Feijoo, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 05 40 5545

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2006

| Patent document cited in search report | | Publication date | Patent family member(s) | | Publication date |
|---|---|---|---|---|---|
| EP 0746078 | A | 04-12-1996 | DE | 69623692 D1 | 24-10-2002 |
| | | | DE | 69623692 T2 | 22-05-2003 |
| | | | US | 5808449 A | 15-09-1998 |
| US 2003098671 | A1 | 29-05-2003 | NONE | | |
| US 2001056330 | A1 | 27-12-2001 | US | 6219623 B1 | 17-04-2001 |
| US 2005057950 | A1 | 17-03-2005 | WO | 2005027332 A1 | 24-03-2005 |
| WO 0182444 | A | 01-11-2001 | AU | 4862601 A | 07-11-2001 |
| | | | GB | 2377565 A | 15-01-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. E. KIM ; J. S. HWANG.** Islanding Detection Method of Distributed Generation Units Connected to Power Distribution System. IEEE, 2000

- **SIMON R. WALL.** Performance of Inverter Interfaced Distributed Generation. IEEE, 2001